# EUROPÄISCHE PATENTSCHRIFT

(11) **EP 1 735 214 B1**
(45) Veröffentlichungstag und Bekanntmachung des Hinweises auf die Patenterteilung: **13.02.2008**
(21) Anmeldenummer: 06742803.7
(22) Anmeldetag: 04.05.2006
(51) Int. Cl.: B65B 9/12

(54) **VORRICHTUNG ZUM EINSCHNÜREN EINES MIT FÜLLGUT GEFÜLLTEN SCHLAUCHS**
DEVICE FOR TIGHTENING A TUBULAR CASING FILLED WITH A STUFFED PRODUCT
DISPOSITIF POUR PINCER UN TUYAU REMPLI D'UN PRODUIT DE REMPLISSAGE

(30) Priorität: 04.05.2005 DE 202005007176 U
(43) Veröffentlichungstag der Anmeldung: 27.12.2006
(73) Patentinhaber: Tipper Tie technopack GmbH, 21509 Glinde (DE)
(72) Erfinder: SCHALK, Gustav, Albrecht, 22113 Oststeinbek (DE)
(74) Vertreter: Westphal, Thomas
(86) Internationale Anmeldenummer: PCT/EP2006/004187
(87) Internationale Veröffentlichungsnummer: WO 2006/117222

(56) Entgegenhaltungen:
- DE-A1- 3 610 010
- DE-B- 1 027 548
- DE-C1- 19 934 154
- US-A- 3 587 204
- PATENT ABSTRACTS OF JAPAN Bd. 2000, Nr. 01, 31. Januar 2000 (2000-01-31) & JP 11 292007 A (JT:KK), 26. Oktober 1999 (1999-10-26)

## Beschreibung

Die Erfindung betrifft eine Vorrichtung zum Einschnüren eines mit einem Füllgut gefüllten Schlauchs, die mehrere Paare von Verdrängern umfasst. In jedem Paar sind die Verdränger so angeordnet, dass sie sich gegenseitig überlappen und eine Öffnung umschließen. In zwei Überlappungspunkten pro Paar grenzen beide Verdränger an die umschlossene Öffnung an. Die Verdränger sind relativ zueinander in der Weise beweglich, dass sie eine lineare Einschnürbewegung vollführen können, mittels derer die Größe der Öffnung verändert wird. Insgesamt umschließen die in Axialrichtung des Schlauchs hintereinander liegenden Öffnungen einen Durchlass.

Vorrichtungen dieser Art kommen insbesondere bei der Wurstproduktion zum Einsatz, wo Füllmaschinen einen Verpackungsschlauch mit einem Füllgut befüllen. Um den gefüllten Schlauch in Verpackungseinheiten zu unterteilen, umfassen die Paare von Verdrängern mit ihren Öffnungen den gefüllten Schlauch. Durch eine Einschnürbewegung der Verdränger werden die Öffnungen verkleinert und der Schlauch eingeschnürt. Im Bereich der Verdränger wird das Füllgut aus dem Schlauch heraus gedrückt, so dass zwei getrennte Verpackungseinheiten entstehen, deren Füllgut vollständig voneinander getrennt ist. Der eingeschnürte Schlauch kann mit einer Verschlussklammer umfasst werden, die die Einschnürung fixiert.

Bei den beispielsweise aus der JP 11 292 007 bekannten Vorrichtungen stellt sich das Problem, dass der Schlauch bei der Einschnürbewegung durch die Verdränger beschädigt werden kann, weil die Verdränger in den Überlappungspunkten wie zwei Schneiden einer Schere wirken.

Der Erfindung liegt die Aufgabe zugrunde, eine Vorrichtung vorzustellen, die die Gefahr von Beschädigungen des Schlauchs vermeidet bzw. verringert.

Die Aufgabe wird gelöst durch die Merkmale des Anspruchs 1. Vorteilhafte Ausführungsformen finden sich in den Unteransprüchen.

Ein Verdränger kann dabei jedes Mittel sein, das ausreichend Festigkeit bietet, um Füllgut aus einem Schlauch herauszudrücken. Hinsichtlich der Form oder des Materials der Verdrängers macht die Erfindung keine Einschränkungen.

Mit der Einschnürbewegung wird der von der Öffnung umschlossene Schlauch eingeschnürt. Die Verdränger bewegen sich linear aufeinander zu, so dass sich die Öffnung verkleinert. Zugleich mit der Verkleinerung der Öffnung wird der Querschnitt des Schlauchs verkleinert und das im Einschnürbereich befindliche füllgut in benachbarte Abschnitte des Schlauchs verdrängt. Die Einschnürbewegung beginnt, sobald die Verdränger am Außenumfang des Schlauchs angreifen. Mit dem überwiegenden Teil der Einschnürbewegung ist der Teil der Bewegung der Verdränger gemeint, in dem diese über 50% der Wegstrecke bzw. des Schwenkbereichs für die gesamte Einschnürbewegung zurückgelegt haben.

Während des Einschnürens bewegen sich die Verdränger linear, wobei die beiden Verdränger eines Paares vorzugsweise eine gemeinsame Bewegungsachse haben. Dies ist vorteilhaft, weil der Schwerpunkt der beiden Verdränger eines Paares während der gesamten Einschnürbewegung konstant bleibt. Durch den konstanten Schwerpunkt bleiben die Vibrationen gering und die Verdränger übertragen bei der Einschnürbewegung nur kleine Kräfte auf die umgebenden Maschinenbauteile. Der konstruktive Aufwand verringert sich.

Von einer Überlappung der Verdränger wird gesprochen, wenn zwei Verdränger sich derart überdecken, dass sie in Axialrichtung gesehen zwischen sich eine abgeschlossene Öffnung umschließen. Die Axialrichtung ist die Richtung, in der der einzuschnürende Schlauch ausgerichtet ist. Dabei ist es unerheblich, ob die Verdränger eines Paares soweit voneinander wegbewegt werden können, dass sie die Öffnung nicht mehr vollständig umschließen. Entscheidend ist es nur, dass die Öffnung während der Einschnürbewegung vollständig umschlossen ist.

Die Überlappungspunkte sind die Punkte am Rand einer Öffnung, in denen zwei Verdränger, die die Öffnung bilden, in Axialrichtung gesehen aneinander grenzen. Da sich die Verdränger bewegen können, sind die Überlappungspunkte keine raumfesten Positionen. Vielmehr verschieben sich die Überlappungspunkte, wenn die Verdränger, die den Überlappungspunkt bilden, sich relativ zueinander bewegen.

Die Öffnungen der einzelnen Paare liegen in Axialrichtung hintereinander, so dass sie sich zumindest teilweise überdecken. Die Schnittmenge aller dieser Öffnungen in Axialrichtung, d.h. der Bereich, der von den Öffnungen noch frei gelassen wird, wird als Durchlass bezeichnet.

Erfindungsgemäß sind die Öffnungen nicht deckungsgleich mit dem Durchlass und die Überlappungspunkte sind während des überwiegenden Teils der Einschnürbewegung vom Durchlass beabstandet. Die Öffnungen sind also derart gegeneinander versetzt, dass jeweils ein Verdränger des einen Paares einen Überlappungspunkt des anderen Paares auf Abstand vom Durchlass hält. Auf diese Weise können die Überlappungspunkte aller Paare vom Durchlass beabstandet sein.

Der Abstand zwischen den Überlappungspunkten und dem Durchlass besteht zumindest während des überwiegenden Teils des Bewegungsablaufs, den die Verdränger beim Einschnüren des Schlauchs vollführen. Es kann sinnvoll sein, bei einem Paar die Einschnürbewegung kurz vor dem Ende anzuhalten, damit es möglich bleibt, dieses Paar entlang des eingeschnürten Schlauchs zu bewegen. In diesem Fall kann es vorkommen, dass bei anderen Paaren von Verdrängern der Abstand zwischen den Überlappungspunkten und dem Durchlass verschwindet.

Durch die erfindungsgemäße Anordnung der Verdränger wird der Schlauch während des überwiegenden Teils der Einschnürbewegung auf Abstand von den Überlappungspunkten gehalten. Indem alle Paare von Verdrängern gleichzeitig auf den Schlauch einwirken, wird der Schlauch auf die Fläche eingeschnürt, die der Schnittmenge aller Öffnungen, also dem Durchlass, entspricht. Da die Überlappungspunkte auf Abstand vom Durchlass sind, sind sie ebenfalls auf Abstand vom eingeschnürten Schlauch. Eine Beschädigung des Schlauchs durch Einklemmen an den Überlappungspunkten wird vermieden, denn die besonders kritischen Überlappungspunkte, bei denen die Gefahr einer Quetschung des Schlauchs auf Grund der gegenläufigen Bewegung der Verdränger besonders groß ist, kommen nicht mehr mit dem Schlauch in Berührung. Am Ende der Einschnürbewegung kann eine Berührung zwischen dem Schlauch und den Überlappungspunkten hingenommen werden, weil bei einem nahezu vollständig eingeschnürten Schlauch die Gefahr von Beschädigungen gering ist.

In einer vorteilhaften Ausführungsform sind die Überlappungspunkte während der vollständigen Einschnürbewegung vom Durchlass beabstandet. Die Gefahr einer Beschädigung des Schlauchs wird weiter verringert.

In der einfachsten Ausführungsform der Erfindung sind zwei Paare von Verdrängern erforderlich, damit alle Überlappungspunkte auf Abstand vom Durchlass gehalten werden können. Die Verdränger der ersten Paare halten die Überlappungspunkte des zweiten Paars beabstandet und umgekehrt.

Die Paare von Verdrängern folgen in axialer Richtung vorzugsweise unmittelbar aufeinander. Bei einem größeren Abstand in Axialrichtung könnte der Schlauch aufgrund seiner Elastizität trotz des Abstands zwischen dem Durchlass und den Überlappungspunkten in Berührung mit den Überlappungspunkten geraten. Die Gefahr von Beschädigungen des Schlauchs würde steigen.

In einer vorteilhaften Ausführungsform sind die Paare von Verdrängern in Axialrichtung relativ zueinander bewegbar. Zum Einschnüren werden die Paare dann so positioniert, dass sie in axialer Richtung unmittelbar aufeinander folgen. Wenn der Schlauch vollständig eingeschnürt ist, können die Paare zur Erzeugung eines füllgutfreien Bereichs im Schlauch auf eine Entfernung zueinander gebracht werden. In dem füllgutfreien Bereich können Clips zum endgültigen Verschließen der Verpackungseinheiten angebracht werden.

Damit die Öffnung mit zwei Verdrängern vollständig umschlossen werden kann, sind die Verdränger an ihrer der Öffnung zugewandten Seite konkav geformt. Als konkave Form wird jede Form bezeichnet, die unter Hinzunahme eines geraden Begrenzungselements zu einer vollständig umschlossenen Öffnung ergänzt werden kann.

Die konkave Form an der der Öffnung zugewandten Seite kann eine V-Form sein. Die Schenkel des V schließen vorzugsweise einen Winkel zwischen 80° und 100°, vorzugsweise zwischen 85° und 95° ein. Bei einem Winkel dieser Größe hat die eingeschlossene Öffnung eine regelmäßige Form.

Der erfindungsgemäß gewünschte Abstand zwischen den Überlappungspunkten und dem Durchlass lässt sich auf einfache Art dadurch erreichen, dass die Paare in einer zur Axialrichtung senkrechten Ebene winkelversetzt zueinander angeordnet sind. Eine gegenseitige Abdeckung der Überlappungspunkte wird vorteilhaft dadurch erreicht, dass die Paare um einen Winkel zwischen 40° und 50°, vorzugsweise zwischen 44° und 46° zueinander versetzt sind.

In einer vorteilhaften Ausführungsform umfasst die Vorrichtung ein Antriebselement für die Bewegung der Verdränger. In Frage kommen insbesondere elektrische oder hydraulische Antriebselemente. Insbesondere kann das Antriebselement einen Spindelantrieb, einen Exzenterantrieb oder einen Getriebeantrieb aufweisen.

Es kann für jeden Verdränger ein eigenes Antriebselement vorgesehen sein, möglich ist es aber auch, dass ein Antriebselement mehrere Verdränger antreibt.

Die Erfindung wird im Folgenden unter Bezugnahme auf die beigefügten Zeichnungen anhand einer vorteilhaften Ausführungsform beispielhaft beschrieben. Es zeigen:

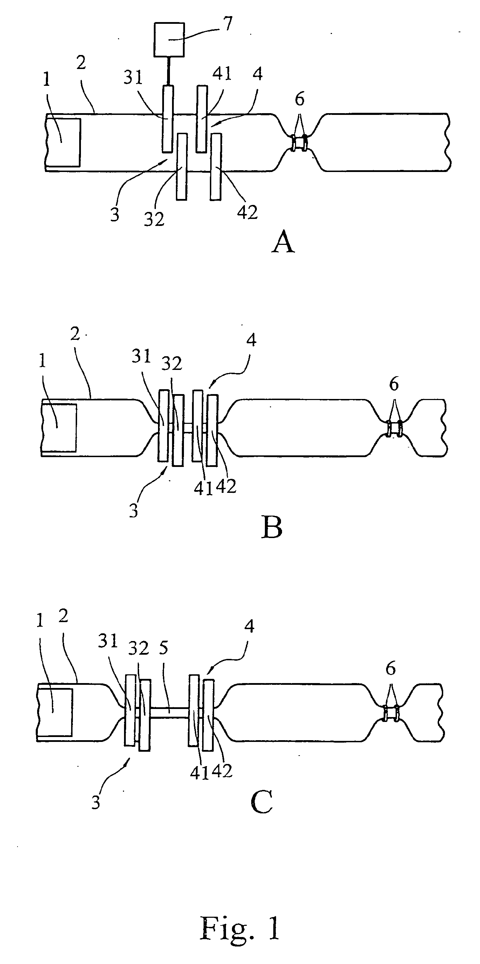

- Fig. 1:: eine schematische Darstellung der Arbeitsweise der erfindungsgemäßen Vorrichtung; und
- Fig. 2:: eine schematische Ansicht der Verdränger der erfindungsgemäßen Vorrichtung.

Durch ein Füllrohr 1 einer nicht dargestellten Füllmaschine wird ein Verpackungsschlauch 2 mit einem Füllgut gefüllt. Parallel zum Austritt des Füllgutes aus dem Füllrohr 1 wird ein passendes Stück des Schlauches 2 vom Außenumfang des Füllrohrs 1 abgezogen.

Der mit Füllgut gefüllte Schlauch 2 wird in Phase A von zwei Paaren 3, 4 von Verdrängern 31, 32 und 41, 42 umschlossen. Ist der Schlauch in Phase B über eine bestimmte Länge mit Füllgut gefüllt, bewegen sich die Verdränger 31, 32 und 41, 42 der Paare 3, 4 aufeinander zu. Die von den Paaren 3, 4 umschlossenen Öffnungen verkleinern sich, der Schlauch 2 wird eingeschnürt.

Nach dem Einschnüren des Schlauches 2 werden die beiden Paare 3, 4 in axialer Richtung voneinander wegbewegt, so dass in Phase C ein füllgutfreier Abschnitt 5 zwischen den Paaren 3, 4 entsteht. Für die Erzeugung des füllgutfreien Abschnitts 5 kann es sinnvoll sein, dass nur das Paar 3 sich relativ zum Schlauch 2 bewegt, während das Paar 4 in fester Position zum Schlauch 2 bleibt. Dies wird erleichtert, wenn das Paar 4 den Schlauch 2 vollständig einschnürt, während das Paar 3 die Einschnürbewegung kurz vor dem Ende stoppt. Im füllgutfreien Abschnitt 5 können Verschlussklammern 6 angebracht werden, die einzelne Verpackungseinheiten des Schlauches 2 dauerhaft verschließen.

Für Phase A ist weiterhin ein Antriebselement 7 für die Bewegung des Verdrängers 31 gezeigt. Die übrigen Verdränger sind mit vergleichbaren Antriebselementen ausgestattet.

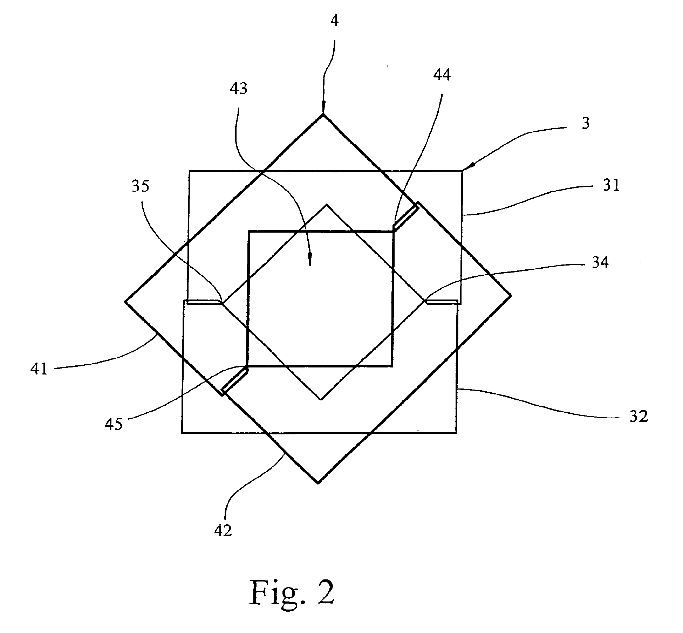

In der Darstellung der erfindungsgemäßen Anordnung von Verdrängern der Figur 2 ist das Paar 3 in durchgezogenen Linien und das Paar 4 in gestrichelten Linien dargestellt. Die Verdränger 31 und 32 des Paares 3 haben an den einander zugewandten Seiten V-förmige Ausnehmungen, sind also konkav geformt. Mit diesen V-förmigen Ausnehmungen umschließen die Verdränger 31, 32 eine quadratische Öffnung 33. In zwei Überlappungspunkten 34, 35 grenzen beide Verdränger 31, 32 an die Öffnung 33 an. Durch eine lineare Bewegung der Verränger 31, 32 auf einander zu verkleinert sich die Öffnung 33. Bei dieser Bewegung bewegen sich die Überlappungspunkte 34 und 35 ebenfalls aufeinander zu. Diese scherenartige Bewegung der Überlappungspunkte 34 und 35 birgt die besondere Gefahr einer Beschädigung des von der Öffnung 33 umschlossenen Schlauchs 2.

Das gestrichelt dargestellte Paar 4 der Verdränger 41, 42 ist gegenüber dem Paar 3 um 45° versetzt angeordnet. Die Verdränger 41, 42 umschließen eine Öffnung 43 mit an die Öffnung 43 angrenzenden Überlappungspunkten 44, 45.

Die Schnittmenge der Öffnungen 33 und 43 bildet den Durchlass, auf den der Schlauch 2 eingeschnürt wird. Durch die um 45° versetzte Anordnung des Paars 3, 4 grenzen die Überlappungspunkte 34, 35, 44, 45 nicht an den Durchlass an. Der Überlappungspunkt 34 wird durch den Verdränger 42 auf Abstand gehalten, der Überlappungspunkt 35 durch den Verdränger 41, der Überlappungspunkt 44 durch den Verdränger 31 und der Überlappungspunkt 45 durch den Verdränger 32.

Die Verdränger der Paare 3, 4 bewegen sich jeweils synchron aufeinander zu, so dass der Abstand zwischen Überlappungspunkten und Durchlass während der gesamten Bewegung aufrecht erhalten wird. Während des Einschnürvorganges kommt der Schlauch 2 nicht in Kontakt mit den Überlappungspunkten, die Gefahr einer Beschädigung des Schlauches wird vermieden bzw. verringert.

## Patentansprüche

1. Vorrichtung zum Einschnüren eines mit Füllgut gefüllten Schlauchs (2) mit mehreren Paaren (3, 4) von Verdrängern (31, 32, 41, 42), wobei
a) die Verdränger jedes Paares (3, 4) in gegenseitiger Überlappung eine Öffnung (33, 43) umschließen,
b) in zwei Überlappungspunkten (34, 35, 44, 45) pro Paar beide Verdränger (31, 32, 41, 42) an die umschlossene Öffnung (33, 43) angrenzen,
c) die Verdränger (31, 32, 41, 42) für eine die Größe der Öffnungen (33, 43) verändernde lineare Einschnürbewegung ausgelegt sind, und
d) die in Axialrichtung des Schlauchs hintereinanderliegenden Öffnungen (33, 43) insgesamt einen Durchlass umschließen,
**dadurch gekennzeichnet, dass** die Öffnungen (33, 43) nicht deckungsgleich mit dem Durchlass sind und dass die Überlappungspunkte (34, 35, 44, 45) während des überwiegenden Teils der Einschnürbewegung vom Durchlass beabstandet sind.

2. Vorrichtung nach Anspruch 1, **dadurch gekennzeichnet, dass** die Überlappungspunkte (34, 35, 44, 45) während der vollständigen Einschnürbewegung vom Durchlass beabstandet sind.

3. Vorrichtung nach Anspruch 1 oder 2, **dadurch gekennzeichnet, dass** sie zwei Paare (3, 4) von Verdrängern (31, 32, 41, 42) umfasst.

4. Vorrichtung nach einem der Ansprüche 1 bis 3, **dadurch gekennzeichnet, dass** die Paare (3, 4) von Verdrängern (31, 32, 41, 42) in axialer Richtung unmittelbar aufeinander folgen.

5. Vorrichtung nach einem der Ansprüche 1 bis 4, **dadurch gekennzeichnet, dass** die Paare (3, 4) von Verdrängern (31, 32, 41, 42) in Axialrichtung relativ zueinander bewegbar sind.

6. Vorrichtung nach einem der Ansprüche 1 bis 5, **dadurch gekennzeichnet, dass** die Verdränger (31, 32, 41, 42) an ihrer der Öffnung zugewandten Seite konkav geformt sind.

7. Vorrichtung nach Anspruch 6, **dadurch gekennzeichnet, dass** die Verdränger (31, 32, 41, 42) an ihrer der Öffnung zugewandten Seite eine V-Form haben.

8. Vorrichtung nach Anspruch 7, **dadurch gekennzeichnet, dass** die Schenkel des V einen Winkel zwischen 80° und 100°, vorzugsweise zwischen 85° und 95° einschließen.

9. Vorrichtung nach einem der Ansprüche 1 bis 8, **dadurch gekennzeichnet, dass** die Paare (3, 4) in einer zur Axialrichtung senkrechten Ebene winkelversetzt zueinander angeordnet sind.

10. Vorrichtung nach Anspruch 9, **dadurch gekennzeichnet, dass** die Paare (3, 4) um einen Winkel zwischen 40° und 50°, vorzugsweise zwischen 44° und 46° zueinander winkelversetzt sind.

11. Vorrichtung nach einem der Ansprüche 1 bis 10, **dadurch gekennzeichnet, dass** die Verdränger (31, 32, 41, 42) einer Paares (3, 4) eine gemeinsame Bewegungsachse haben.

12. Vorrichtung nach einem der Ansprüche 1 bis 11, **dadurch gekennzeichnet, dass** sie ein Antriebselement (7) für die Verdrängerbewegung umfasst.

13. Vorrichtung nach einem der Ansprüche 1 bis 12, **dadurch gekennzeichnet, dass** für jeden Verdränger (31, 32, 41, 42) ein Antriebselement (7) vorgesehen ist.

14. Vorrichtung nach einem der Ansprüche 1 bis 13, **dadurch gekennzeichnet, dass** ein Antriebselement (7) für mehrere Verdränger (31, 32, 41, 42) vorgesehen ist.

## Claims

1. Device for constricting a tube (2) filled with filling, which device comprises several pairs (3, 4) of displacement members (31, 32, 41, 42), in which
a) the displacement members of each pair (3, 4) overlap one another to enclose an opening (33, 43),
b) both displacement members (31, 32, 41, 42) adjoin the enclosed opening (33, 43) at two overlap points (34, 35, 44, 45) per pair,
c) the displacement members (31, 32, 41, 42) are designed for a linear constriction movement that alters the size of the openings (33, 43), and
d) the openings (33, 43) lying one behind the other in the axial direction of the tube together enclose a passage,
**characterized in that** the openings (33, 43) are not congruent with the passage, and **in that** the overlap points (34, 35, 44, 45) are spaced apart from the passage during the greater part of the constriction movement.

2. Device according to Claim 1, **characterized in that** the overlap points (34, 35, 44, 45) are spaced apart from the passage during the whole of the constriction movement.

3. Device according to Claim 1 or 2, **characterized in that** it comprises two pairs (3, 4) of displacement members (31, 32, 41, 42).

4. Device according to one of Claims 1 to 3, **characterized in that** the pairs (3, 4) of displacement members (31, 32, 41, 42) succeed one another directly in the axial direction.

5. Device according to one of Claims 1 to 4, **characterized in that** the pairs (3, 4) of displacement members (31, 32, 41, 42) are movable relative to one another in the axial direction.

6. Device according to one of Claims 1 to 5, **characterized in that** the displacement members (31, 32, 41, 42) are concavely shaped on their face directed towards the opening.

7. Device according to Claim 6, **characterized in that** the displacement members (31, 32, 41, 42) have a V shape on their face directed towards the opening.

8. Device according to Claim 7, **characterized in that** the limbs of the V enclose an angle of between 80° and 100°, preferably of between 85° and 95°.

9. Device according to one of Claims 1 to 8, **characterized in that** the pairs (3, 4) are offset at an angle relative to one another in a plane perpendicular to the axial direction.

10. Device according to Claim 9, **characterized in that** the pairs (3, 4) are offset relative to one another at an angle of between 40° and 50°, preferably of between 44° and 46°.

11. Device according to one of Claims 1 to 10, **characterized in that** the displacement members (31, 32, 41, 42) of one pair (3, 4) have a common axis of movement.

12. Device according to one of Claims 1 to 11, **characterized in that** it comprises a drive element (7) for the movement of the displacement members.

13. Device according to one of Claims 1 to 12, **characterized in that** one drive element (7) is provided per displacement member (31, 32, 41, 42).

14. Device according to one of Claims 1 to 13, **characterized in that** one drive element (7) is provided for several displacement members (31, 32, 41, 42).

## Revendications

1. Dispositif de resserrement d'un boyau tubulaire (2) rempli de produit, comportant plusieurs paires (3, 4) d'éléments de refoulement (31, 32, 41, 42), sachant que
a) les éléments de refoulement de chaque paire (3, 4) entourent une ouverture (33, 43) en se chevauchant mutuellement,
b) en deux points de chevauchement (34, 35, 44, 45) par paire, les deux éléments de refoulement (31, 32, 41, 42) sont adjacents à l'ouverture (33, 43) entourée,
c) les éléments de refoulement (31, 32, 41, 42) sont conçus pour un mouvement de resserrement linéaire modifiant la dimension des ouvertures (33, 43), et
d) les ouvertures (33, 43), situées l'une derrière l'autre dans le sens axial du boyau tubulaire, entourent dans l'ensemble un passage,
**caractérisé en ce que** les ouvertures (33, 43) ne coïncident pas avec le passage et **en ce que** les points de chevauchement (34, 35, 44, 45) sont situés à distance du passage pendant la majeure partie du mouvement de resserrement.

2. Dispositif selon la revendication 1, **caractérisé en ce que** les points de chevauchement (34, 35, 44, 45) sont situés à distance du passage pendant tout le mouvement de resserrement.

3. Dispositif selon la revendication 1 ou 2, **caractérisé en ce qu'**il comporte deux paires (3, 4) d'éléments de refoulement (31, 32, 41, 42).

4. Dispositif selon l'une quelconque des revendications 1 à 3, **caractérisé en ce que** les paires (3, 4) d'éléments de refoulement (31, 32, 41, 42) se suivent directement dans le sens axial.

5. Dispositif selon l'une quelconque des revendications 1 à 4, **caractérisé en ce que** les paires (3, 4) d'éléments de refoulement (31, 32, 41, 42) peuvent se déplacer l'une par rapport à l'autre dans le sens axial.

6. Dispositif selon l'une quelconque des revendications 1 à 5, **caractérisé en ce que** les éléments de refoulement (31, 32, 41, 42) sont réalisés avec une forme concave sur leur face orientée vers l'ouverture.

7. Dispositif selon la revendication 6, **caractérisé en ce que** les éléments de refoulement (31, 32, 41, 42) sont réalisés en forme de V sur leur face orientée vers l'ouverture.

8. Dispositif selon la revendication 7, **caractérisé en ce que** les branches du V délimitent un angle entre 80° et 100°, de préférence entre 85° et 95°.

9. Dispositif selon l'une quelconque des revendications 1 à 8, **caractérisé en ce que** les paires (3, 4) sont agencées dans un plan perpendiculaire à la direction axiale avec un décalage angulaire l'une par rapport à l'autre.

10. Dispositif selon la revendication 9, **caractérisé en ce que** les paires (3, 4) sont décalées l'une par rapport à l'autre selon un angle entre 40° et 50°, de préférence entre 44° et 46°.

11. Dispositif selon l'une quelconque des revendications 1 à 10, **caractérisé en ce que** les éléments de refoulement (31, 32, 41, 42) d'une paire (3, 4) ont un axe de déplacement commun.

12. Dispositif selon l'une quelconque des revendications 1 à 11, **caractérisé en ce qu'**il comporte un élément d'entraînement (7) pour le mouvement de refoulement.

13. Dispositif selon l'une quelconque des revendications 1 à 12, **caractérisé en ce qu'**il est prévu un élément d'entraînement (7) pour chaque élément de refoulement (31, 32, 41, 42).

14. Dispositif selon l'une quelconque des revendications 1 à 13, **caractérisé en ce qu'**il est prévu un élément d'entraînement (7) pour plusieurs éléments de refoulement (31, 32, 41, 42).
